# EUROPÄISCHE PATENTSCHRIFT

(11) **EP 1 339 574 B1**
(45) Veröffentlichungstag und Bekanntmachung des Hinweises auf die Patenterteilung: **29.03.2006**
(21) Anmeldenummer: 01985371.2
(22) Anmeldetag: 06.12.2001
(51) Int. Cl.: B60R 22/46, B60R 21/00

(54) **VERFAHREN ZUR ANSTEUERUNG EINES REVERSIBLEN GURTSTRAFFERS**
METHOD FOR CONTROLLING A REVERSIBLE BELT TENSIONER
PROCEDE POUR COMMANDER UN TENDEUR DE SANGLE REVERSIBLE

(30) Priorität: 08.12.2000 DE 10061040
(43) Veröffentlichungstag der Anmeldung: 03.09.2003
(73) Patentinhaber: DaimlerChrysler AG, 70567 Stuttgart (DE)
(72) Erfinder: BULLINGER, Wilfried, 70825 Korntal-Münchingen (DE); EBERLE, Walter, 73269 Hochdorf (DE)
(86) Internationale Anmeldenummer: PCT/EP2001/014328
(87) Internationale Veröffentlichungsnummer: WO 2002/047049

(56) Entgegenhaltungen:
- DE-A- 19 954 878
- US-A- 5 788 281

## Beschreibung

Die Erfindung betrifft ein Verfahren zur Ansteuerung eines reversiblen Gurtstraffers gemäß dem Oberbegriff des Patentanspruchs 1.

Sicherheitsgurte, welche heute üblicherweise in Kraftfahrzeugen verbaut werden, verfügen über einen Mechanismus zum automatischen Aufwickeln des losen Gürtbandes auf eine Gurtaufwickelrolle, welche auf einer Gurtspule angeordnet ist. Durch das automatische Aufwickeln wird erreicht, dass der angelegte Gurt locker am Körper eines Insassen anliegt und bei Nichtgebrauch des Sicherheitsgurts auf der Gurtaufwickelrolle aufgerollt ist. Das Abwickeln des Gurts von der Gurtaufwickelrolle geschieht gegen ein Drehmoment, welches von einer Rückzugsfeder erzeugt wird, und ist auch bei angelegtem Gurt möglich, um dem Insassen eine weitgehend freie Bewegung zu ermöglichen.

Weiterhin ist üblicherweise eine Blockiervorrichtung vorhanden, welche als Gurtauszugssperre wirkt. Diese Blockiervorrichtung wird durch eine Ansteuervorrichtung mit gurtband-und fahrzeugsensitivem Sensor, bei schnellem Abwickeln des Gurts von der Gurtaufwickelrolle, ab einer vorgegebenen Beschleunigung der Gurtaufwickelrolle in Abwickelrichtung oder ab einer vorgegebenen Beschleunigung des Fahrzeugs ausgelöst. Die Gurtaufwickelrolle wird dadurch in der vorliegenden Position festgelegt, so dass ein Abwickeln des Gurts verhindert wird. Eine übliche Blockiervorrichtung besteht beispielsweise aus einer Blockierverzahnung der Gurtspule und einer Blockierklinke, welche schwenkbar gelagert ist und durch die Ansteuervorrichtung in die Blockierverzahnung der Gurtspule einschwenkbar ist. Die Verzahnungen an der Gurtspule und der Blockierklinke sind selbstsperrend gestaltet, was dazu führt, dass der Gurtauszug blockiert wird, solange eine Zugbelastung am Gurt anliegt. Wird der Gurt von dieser Zugbelastung entlastet, so kann der Blockiermechanismus öffnen, das heißt er kann in seinen nicht wirksamen Zustand zurückgeführt werden. Dieses Zurückführen erfolgt magnetisch, elektromotorisch oder üblicherweise mechanisch, beispielsweise durch eine Rückholfeder an der schwenkbar gelagerten Sperrklinke. Eine solche Blockiervorrichtung und ein Verfahren zur Ansteuerung eines Gurtstraffers mit einer solchen Blockiervorrichtung ist in der nachveröffentlichten DE 10061040 Al beschrieben.

Bei vielen Sicherheitsgurten ist zudem ein Gurtstraffer vorhanden, welcher die Schutzwirkung des Sicherheitsgurts erhöht. Der Gurtstraffer weist einen Antrieb auf, welcher angesteuert werden kann, um eine mechanische Vorrichtung anzutreiben, welche das lose Gurtband verkürzt und/oder einen Insassen nach hinten zieht. Bei einem pyrotechnischen Energiespeicher beispielsweise wird eine chemische Substanz mittels eines Zünders zu einer exothermen Reaktion veranlasst. Bei dieser Reaktion wird ein Gasstrom erzeugt, welcher die mechanische Vorrichtung antreibt. Die angetriebene Vorrichtung ist mit der Gurtspule mechanisch verbunden oder mit dieser mechanisch verbindbar, beispielsweise über eine Kupplung. Über diese Verbindung übt die mechanische Vorrichtung auf die Gurtspule ein Drehmoment aus. Aufgrund dieses Drehmoments dreht sich die Gurtspule mit der darauf angeordneten Gurtaufwickelrolle und strafft das abgewickelte Gurtband.

Außer den heutzutage in Kraftfahrzeugen eingesetzten, zumeist pyrotechnischen Gurtstraffern sind auch reversible Gurtstraffer in Fahrzeugen einsetzbar, welche mehrmals, auch schnell hintereinander, ausgelöst werden können. Diese reversiblen Gurtstraffer können unterschiedliche Antriebe aufweisen, beispielsweise kann ein solcher Gurtstraffer durch einen Elektromotor angetrieben werden, welcher dauerhaft oder über eine Kupplung steuerbar auf die Gurtspule wirkt. Andere reversible Gurtstraffer werden mit Druckluft aus einem Druckspeicher, oder durch eine gespannte Feder angetrieben, wobei der Druckspeicher während des Fahrbetriebs wieder befüllbar und die Feder während des Fahrbetriebs wieder spannbar ist.

Auf diese Weise angetriebene reversible Gurtstraffer ermöglichen eine Straffung des Sicherheitsgurts mit vorgebbarer Stärke, vorgebbarer Geschwindigkeit und vorgebbarer Zeitdauer. Durch die mehrfache Auslösbarkeit des reversiblen Gurtstraffers wird ein vorbeugendes Auslösen desselben ermöglicht. Ein vorbeugendes Auslösen bedeutet, dass der Gurtstraffer in sicherheitskritischen Fahrsituationen ausgelöst wird, welche beispielsweise von Fahrdynamiksensoren oder Fahrzeugumgebungssensoren erkannt werden, oder auf welche durch die Auswertung der Bremspedalbetätigung, des Lenkwinkels oder einer Fahrerbeobachtung geschlossen wird. Über ein vorbeugendes Auslösen hinaus kann ein reversibler Gurtstraffer auch zur haptischen Warnung des Fahrers in sicherheitskritischen Situationen eingesetzt werden. Bei einer vorbeugenden Auslösung des Gurtstraffers, welche vor dem Erfassen einer Kollision stattfinden kann oder bei einer Auslösung des Gurtstraffers zu Warnzwecken ist es wünschenswert, dass der Gurt nach der erfolgten Straffung, nach Beendigung der Gefahrensituation und bei sichergestelltem Normalfahrbetrieb wieder lose an den Insassen anliegt. Ein sichergestellter Normalfahrbetrieb liegt vor, wenn die Bewertung der Situation durch ein Steuergerät oder einen Gefahrenrechner nicht ergibt, dass eine sicherheitskritische Situation vorliegt, beziehungsweise wenn die für die Auslösung des Gurtstraffers notwendige Bedingung nicht mehr erfüllt ist. Eine solche Bedingung kann das Vorhandensein oder das Fehlen eines bestimmten Signals auf einem Datenbus oder einer Datenleitung sein.

Nach einer reversiblen Straffung des Sicherheitsgurts mittels eines reversiblen Gurtstraffers kann der Fall eintreten, dass aufgrund eines gurtbandsensitiven Sensors oder eines fahrzeugsensitiven Sensors, welche die Blockiervorrichtung elektrisch oder mechanisch ansteuern, die Gurtauszugssperre wirksam wurde. Beispiele für gurtbandsensitive Sensoren sind ein mechanischer Fliehkraftsensor im Gurtaufrollmechanismus, ein elektromechanischer Fliehkraftsensor oder ein elektronischer Gurtauszugssensor, welcher die Auszugsgeschwindigkeit des Gurtbandes oder dessen Beschleunigung erfasst. Ein gurtbandsensitiver Sensor kann insbesondere dann ansprechen, wenn nach einer Gurtstraffung ein Freigeben des gestrafften Gurts erfolgt, welcher unter einer Zugbelastung steht. Diese Zugbelastung des gestrafften Gurts ist insbesondere abhängig von der Stärke des zuvor erfolgten Straffvorgangs und von der Sitzposition des Insassen vor dem Straffvorgang. Durch die Zugbelastung wird der Gurt nach einem Straffvorgang wieder von der Gurtaufwickelrolle abgewickelt, nachdem das vom Gurtstrafferantrieb auf die Gurtspule ausgeübte Drehmoment abnimmt. Erfolgt das Abwickeln des Gurtbandes zu schnell, so spricht der gurtbandsensitive Sensor an und die Blockiervorrichtung wird - zumeist mechanisch - angesteuert, so dass sie schließt. Das heißt die Gurtauszugssperre wird wirksam. Die Gurtauszugssperre kann auch bereits wirksam werden, wenn der gurtbandsensitive Sensor aufgrund des Aufwickelvorgangs während der Gurtstraffung oder der fahrzeugsensitive Sensor aufgrund der Fahrzeugbewegung anspricht. Ist die Gurtauszugssperre wirksam, so ist es nicht mehr möglich das gestraffte Gurtband abzuwickeln und die Bewegungsfreiheit der Insassen ist stark eingeschränkt. Das Gurtband soll deshalb wieder freigegeben werden, falls die Ursache für die Auslösung des Gurtstraffers nicht mehr vorhanden ist oder falls ein Normalfahrbetrieb sichergestellt ist. Um das Gurtband wieder freizugeben, ist bei den heute in Kraftfahrzeugen üblichen Blockiervorrichtungen die Sperrklinke von der Blockierverzahnung zu lösen. Die Freigabe des Gurtbands ist nur dann möglich, wenn der fahrzeugsensitive und der gurtbandsensitive Sensor die Blockiervorrichtung nicht zum Schließen derselben ansteuern.

Aus der DE 20013541 U1 ist eine Sicherheitsgurt-Spanneinrichtung mit einer Gurtaufwickelspule und einer Verriegelungseinrichtung bekannt, mit der eine Rotation der Spule in Abwickelrichtung des Gurtes verhindert werden kann. Es ist ein Gurtspannungs-Steuermechanismus mit einem Motor vorgesehen, welcher dazu dient, ein Drehmoment zu erzeugen, welches auf die Spule übertragen wird. Bei Vorliegen eines Notzustandes des Kraftfahrzeugs wird der Motor in Aufwickelrichtung des Gurtes über eine erste vorgegebenen Zeitspanne angetrieben, um den Fahrgast mit dem gestrafftem Gurt zurück zu halten. Nach Beendigung des Betriebes des Motors und wenn vorgegebenen Bedingungen, welche auf eine Beendigung des Notzustandes hinweisen, erfüllt sind, wird der Motor erneut in Aufwickelrichtung des Gurtes in Betrieb gesetzt, und zwar über eine zweite vorgegebene Zeitspanne T2. Damit soll eine bei Auftreten des Notzustandes eingeleitete verriegelung wieder gelöst und erreicht werden, dass der Fahrgast leicht freigegeben und zuverlässig aus dem Zustand, in welchem er sicher gehalten wird, befreit wird, was dadurch geschieht, dass der Motor in Aufwickelrichtung des Gurtes betrieben wird. Unmittelbar nach Verstreichen der Zeitspanne T2, während der der Motor in Aufwickelrichtung betrieben wurde, wird der Motor erneut für eine Zeitspanne T3 in Abwickelrichtung betrieben, um Gurtband aktiv abzuwickeln. Zur Ermittlung eines Notzustandes, werden die Fahrzeuggeschwindigkeit, die Bremsbetätigungsgeschwindigkeit und die Fahrzeugbeschleunigung mit Schwellwerten verglichen. Die Beendigung des Notzustandes wird erkannt, wenn die Fahrzeuggeschwindigkeit oder Beschleunigung eine Schwelle unterschreiten oder das Fahrzeug anhält. Als nachteilig wird seitens der Anmelderin angesehen, dass das in der DE 200 13 541 U1 beschriebene Verfahren nicht zuverlässig dazu führt, dass nach Beendigung des Notzustandes die Verriegelung gelöst und das Gurtband freigegeben wird.

Aufgabe der Erfindung ist es, den Komfort bei der Anwendung eines reversiblen Gurtstraffers zu verbessern. Diese Aufgabe wird erfindungsgemäß durch die Merkmale des Anspruchs 1 gelöst.

Bei dem erfindungsgemäßen Verfahren zur Ansteuerung eines Gurtstraffers wird nach einem aufgrund einer Gefahrensituation zum Schutz eines Insassen erfolgten Gurtstraffvorgangs und bei Vorliegen einer vorgebbaren Bedingung, welche indikativ für eine Beendigung der Gefahrensituation und somit indikativ für einen Normalbetriebszustand des Fahrzeugs ist, der Gurtstraffer zum Öffnen der Blockiervorrichtung in einem Öffnungsmodus angesteuert. Diese Ansteuerung erfolgt derart, dass sich die Gurtspule zunächst in einer Aufwickelphase um einen bestimmten Drehwinkel in Aufwickelrichtung dreht, da das Öffnen der Blockiervorrichtung nur dann erfolgen kann, wenn das Gurtband keine Kraft mehr auf den Blockiermechanismus ausübt und beispielsweise bei einer Blockiervorrichtung mit hinterschnittener Blockierverzahnung eine Drehung der Gurtspule mindestens um die Hinterschneidung der Zähne stattfindet, wobei das Gurtband geringfügig aufgewickelt wird. In einer an die Aufwickelphase anschließenden Haltephase wird der Antrieb des Gurtstraffers für eine vorgebbare Haltezeit T_{H} derart angesteuert, dass die Gurtspule während dieser Haltezeit T_{H} in Ihrer Winkelstellung gehalten wird, das heißt dass sich die Gurtspule nicht dreht und der Gurt nicht ab- oder aufgewickelt wird. Hierbei wird die Blockiervorrichtung für eine vorgebbare Haltezeit T_{H} von der Zugbelastung, welche vom am Insassen eng anliegenden gestrafften Gurt ausgeht entlastet. Im Anschluss an die Haltephase wird das Gurtband in einer Abwickelphase zum Abwickeln freigegeben. Vorteil der Erfindung ist es, dass die Haltezeit T_{H} so vorgebbar ist, dass bis zu deren Ende das Gurtband mit einer gewünschten Wahrscheinlichkeit abgewickelt werden kann.

Da die Blockiervorrichtung geöffnet sein muss und der fahrzeugsensitive Sensor nicht ansprechen darf, um das Gurtband abwickeln zu können, wird die Haltezeit T_{H} beispielsweise so vorgegeben, dass diese Bedingungen mit der vorgegebenen Wahrscheinlichkeit erfüllt sind.

In einer Ausgestaltung des Verfahrens wird die Haltezeit T_{H} so vorgegeben, dass sichergestellt wird, das spätestens bis zum Ende der Haltezeit T_{H} der fahrzeugsensitive Sensor der Gurtauszugssperre das Öffnen der Blockiervorrichtung ermöglicht. Hierdurch wird erreicht dass die Ansteuerung des Gurtstrafferantriebs erst dann beendet und der Motorstrom des Gurtstrafferantriebsmotors erst dann heruntergeregelt wird, wenn sich die Gurtspule in Abwickelrichtung drehen und das Gurtband zum Abwickeln freigeben kann, ohne dass die Gurtauszugssperre wirksam ist. Ein durch eine wirksame Gurtauszugssperre erforderliches abermaliges Ansteuern des Gurtstrafferantriebs zum Lösen der Blockiervorrichtung und ein damit verbundener nochmaliger Gurtbandaufwickelvorgang, durch welchen ein Insasse belästigt oder irritiert werden könnte wird verhindert.

In einer Weiterbildung des Verfahrens wird eine für das Öffnen der Blockiervorrichtung indikative Größe erfasst. Die Haltezeit T_{H} wird mindestens so lange sein, bis mittels der für das Öffnen der Blockiervorrichtung indikativen Größe auf das Öffnen der Blockiervorrichtung geschlossen wird. Diese Ausgestaltung hat den Vorteil, dass die Haltezeit T_{H} nicht situationsunabhängig so groß vorgegeben werden muss, dass in allen oder zumindest den am häufigsten vorkommenden Situationen das Öffnen der Blockiervorrichtung innerhalb der Haltezeit T_{H} sichergestellt wird. Die Haltzeit kann hierdurch zur Erhöhung des Komforts für die Insassen je nach Fahrsituation wesentlich verkürzt werden.

Eine Größe, welche indikativ für das Öffnen der Blockiervorrichtung ist, ist beispielsweise das Signal eines Kontaktschalters an der Blockiervorrichtung, welcher einen Kontakt genau dann schließt, wenn die Blockiervorrichtung einen der beiden Zustände Geöffnet oder Geschlossen einnimmt und welche den Kontakt dann öffnet, wenn die Blockiervorrichtung den anderen der beiden Zustände einnimmt.

In einer Ausgestaltung des Verfahrens wird die Haltezeit T_{H} als eine Funktion mindestens eines fahrdynamischen Parameters vorgegeben. Der vorgegebene oder die vorgegebenen Parameter werden erfasst und mittels dem oder den erfassten Parametern wird die Haltezeit T_{H} entsprechend der vorgegebenen Funktion ermittelt. Die Funktion kann beispielsweise in einem einfachen Fall so aussehen, dass bei einer Vollbremsung aus einer Geschwindigkeit über einem Geschwindigkeitsschwellwert die Haltezeit T_{H} größer ist, als bei einer Vollbremsung aus einer Geschwindigkeit unterhalb des Geschwindigkeitsschwellwerts. Vorteil dieser Ausgestaltung ist es, dass die Haltezeit T_{H} an die jeweilige Situation angepasst ist.

In einer Ausgestaltung des Verfahrens wird die Längsbeschleunigung oder deren Verlauf als Parameter zur Ermittlung der Haltezeit T_{H} herangezogen. Die beispielsweise bei einem Bremsmanöver auftretende Längsbeschleunigung des Fahrzeugs wird erfasst und der Gurtstraffer wird derart angesteuert, dass die Gurtspule durch den Gurtstrafferantrieb solange in der Position gehalten wird, in der sich die Blockiervorrichtung öffnen kann, bis die erfasste Längsbeschleunigung für eine vorgebbare Zeitdauer kleiner als ein vorgebbarer Schwellwert ist. Vorteil dieser Ausgestaltung des Verfahrens ist es, dass mit der Fahrzeuglängsbeschleunigung eine Größe herangezogen wird, welche auch die Blockiervorrichtung eines Gurtsystems beeinflusst: Ist die Längsbeschleunigung oberhalb einer vorgegebenen Schwelle, so kann der Blockiermechanismus aufgrund eines beschleunigungssensitiven Sensors, welcher beispielsweise ab einer Fahrzeugbeschleunigung von 0,3 g anspricht, nicht öffnen. Anstelle der Längsbeschleunigung (bzw. deren Verlauf) oder vorzugsweise zusätzlich zur Längsbeschleunigung kann auch die Querbeschleunigung (bzw. deren Verlauf) auf dieselbe Weise herangezogen werden.

In einer anderen Ausgestaltung werden zur Ermittlung der Zeitdauer, während der die Gurtspule in einer Position gehalten wird, in welcher sich die Blockiervorrichtung öffnen kann ein Bremsdruck (bzw. dessen Verlauf) und/oder ein Reibwert zwischen Reifen und Straße und/oder die Eigengeschwindigkeit (oder deren Verlauf) und/oder die Gaspedalstellung und/oder der Lenkwinkel und/oder der Gierwinkel und/oder die Querbeschleunigung erfasst. Alternativ oder ergänzend hierzu werden ein Signal eines Bremsassistenzsystems oder ein Signal eines Fahrdynamikregelsystems erfasst und zur Ermittlung der Haltezeit T_{H} herangezogen.

In einer einfachen Ausgestaltung ist die Haltezeit T_{H} eine Funktion der Längsbeschleunigung, wobei bei einem Beschleunigungswechsel von negativer Beschleunigung (Verzögerung beispielsweise durch Bremseingriff) zu positiver Beschleunigung (z. B. durch Gaspedalbetätigung) die Haltezeit T_{H} = 0 gesetzt wird.

In einer weiteren Ausgestaltung des Verfahrens ist die Haltezeit T_{H} eine Funktion der Fahrzeuggeschwindigkeit und eines Signals eines Bremsassistenzsystems. Die Ausgabe dieses Bremsassistenzsignals von dem Bremsassistenzsystem bewirkt eine Vollbremsung und eine Auslösung des reversibles Gurtstraffers zum Schutz eines Fahrzeuginsassen. Die Haltezeit T_{H} ist nun gleich einer ersten Zeitdauer T₁, wenn das Fahrzeug nach Wegfall dieses Bremsassistenzsignals und/oder nach Beendigung der Vollbremsung eine Geschwindigkeit kleiner oder gleich einem Geschwindigkeitsschwellwert aufweist und die Haltezeit T_{H} ist gleich einer zweiten Zeitdauer T₂, wenn das Fahrzeug nach Wegfall des Bremsassistenzsignals eine Geschwindigkeit größer dem Geschwindigkeitsschwellwert aufweist. Vorzugsweise ist der Geschwindigkeitsschwellwert gleich Null. Es können auch mehrere verschiedene Geschwindigkeitsschwellwerte und mehrere Haltezeiten T₁ bis Tₙ vorgegeben werden, um das Verfahren zu verfeinern.

In einem einfachen Beispiel wird zwischen zwei Fällen mittels des Geschwindigkeitsschwellwerts Null unterschieden: Erfolgt die Vollbremsung bis zum Stillstand des Fahrzeugs, soll sie ab dem Zeitpunkt als beendet gelten, ab dem das Fahrzeug keine Eigengeschwindigkeit mehr aufweist. Die Eigengeschwindigkeit bei Stillstand des Fahrzeugs ist gleich Null, also gleich dem Geschwindigkeitsschwellwert, so dass die Haltezeit gleich T₁ ist. Erfolgt die Vollbremsung nicht bis zum Stillstand des Fahrzeugs, so weist das Fahrzeug nach dem Wegfall des Bremsassistenzsignals eine Eigengeschwindigkeit größer Null auf, und die Haltezeit ist gleich T₂. Da das Fahrzeug während einer Vollbremsung bei genügender Reibung auf dem Untergrund Energie im Fahrwerk aufnimmt, schwingt das Fahrzeug im Stillstand für eine kurze Zeit (bis ca. 1 s). Während dieser Zeit treten am Fahrwerk Beschleunigungen auf, welche aufgrund des fahrzeugsensitiven Sensors die Gurtauszugssperre wirksam werden lassen, so dass der Abwickelvorgang nicht erfolgen kann. Die Haltezeit T₁ wird entsprechend groß gewählt, beispielsweise gleich T₁ = 1 s. Erfolgt die Vollbremsung nicht bis zum Stillstand des Fahrzeugs, so treten diese Schwingungen nicht oder nur sehr schwach auf, was in einem bei heutigen Fahrzeugen konstruktionsbedingten kontinuierlichen Lösen der Bremsbeläge begründet ist. Die Haltezeit T₂ kann demzufolge wesentlich kleiner gewählt werden und ist beispielsweise T₂ = 0,3 s.

Im Haltemodus wird der Gurtstrafferantrieb derart angesteuert, dass die Gurtspule durch den Gurtstrafferantrieb in einer Position gehalten wird, in der die Stellung der Verzahnung an einer Sperrklinke und einem auf der Gurtspule befindlichen Zahnrad das Öffnen der Blockiervorrichtung ermöglichen.

Bevorzugt wird die Gurtspule mittels des Gurtstrafferantriebs nur gerade soweit gedreht, bis zum ersten mal eine Position erreicht ist, in welcher die Blockiervorrichtung öffnen kann. Diese Position kann ermittelt werden, indem der Drehwinkel der Gurtspule beispielsweise mittels eines Drehwinkelgebers erfasst oder der Verlauf des Motorstroms ausgewertet wird. Durch die möglichst geringe Drehung der Gurtspule wird der Kraftanstieg im Gurt, welcher durch die Ansteuerung zum Öffnen der Blockiervorrichtung bewirkt wird, möglichst klein gehalten.

Ergänzend ist es vorteilhaft, wenn die Ansteuerung des Gurtstraffers derart erfolgt, dass in einer sich an die Haltephase anschließenden Abwickelphase das Drehmoment des Gurtstrafferantriebs nicht schlagartig, sondern langsam abgesenkt wird. Hierdurch erfolgt der Abwickelvorgang in einer Weise, dass der gurtbandsensitive Sensor nicht anspricht und die Blockiervorrichtung nicht erneut wirksam wird. Das langsame Absenken des Drehmoments erfolgt beispielsweise indem der Motorstrom eines elektromotorischen Gurtstraffers kontinuierlich verringert wird. Der Insasse befindet sich nach der Abwickelphase in angegurtetem Zustand mit lose anliegendem Gurt.

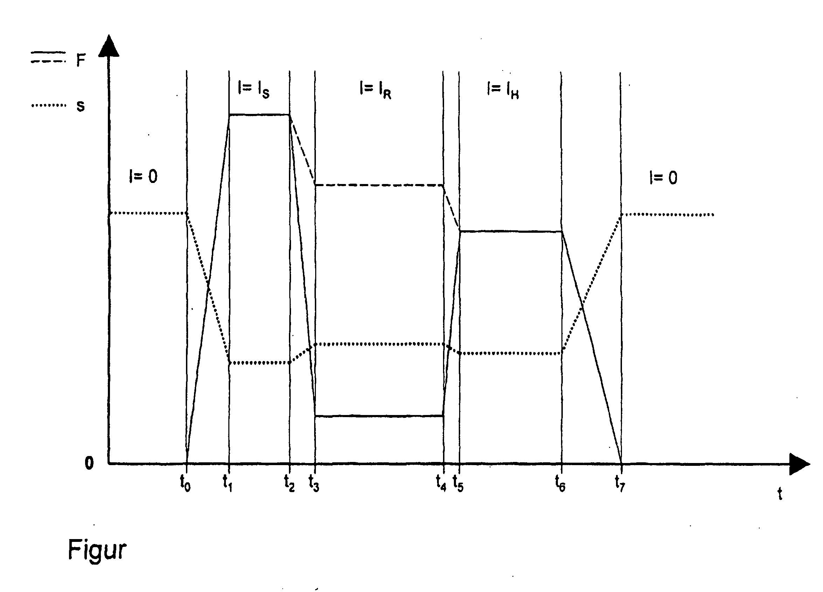

Nachfolgend wird eine vorteilhafte Ausführungsform des erfindungsgemäßen Verfahrens anhand der Zeichnung näher beschrieben. Die einzige Figur zeigt die Verläufe der Gurtstrafferantriebskraft F (durchgezogen/gestrichelt) und des Gurtwegs s (gepunktet) gegenüber der Zeit t bei der Durchführung des erfindungsgemäßen Verfahrens. Die Verläufe sind lediglich qualitativ dargestellt und die Verhältnisse der einzelnen Zeitintervall zwischen jeweils zwei Zeitpunkten tₙ und tₙ₊₁ entsprechen nicht denen bei einem tatsächlichen Verfahrensablauf.

In der Figur kennzeichnen die Zeitpunkte t₀ den Beginn und t₇ das Ende des Verfahrens zur Ansteuerung eines reversiblen Gurtstraffers.

Bei dem zur Figurenbeschreibung herangezogenen reversiblen Gurtstraffer handelt es sich beispielhaft um einen elektromotorisch angetriebenen Gurtstraffer. Alternativ kann aber auch ein pneumatisch oder hydraulisch angetriebener Gurtstraffer verwendet werden. Bei einem elektromotorischen Gurtstraffer ist die wichtigste direkt steuerbare Größe der Motorstrom, welcher durch den Antriebsmotor fließt. Es wird deshalb im Folgenden auf den Motorstrom I Bezug genommen. Dieser ist eng mit der Gurtstrafferantriebskraft F verknüpft, welche der Gurtstrafferantrieb auf den Gurt ausübt. Eine Erhöhung des Motorstroms bewirkt regelmäßig auch eine Erhöhung der Gurtstrafferantriebskraft F.

Die Gurtstraffung zum Schutz eines Insassen beginnt im Zeitpunkt t₀. Bis zu diesem Zeitpunkt t₀ befindet sich das Fahrzeug in einem Regelbetriebszustand und der Gurtstraffer befindet sich demzufolge im Grundzustand, das heißt er ist inaktiv. Dementsprechend ist der Motorstrom, welcher im Grundzustand durch den Gurtstrafferantriebsmotor fließt I = 0. Zu dem Zeitpunkt t₀ wird nun beispielsweise ein Steuersignal eines Bremsassistenzsystems erfasst, welches bewirkt, dass der reversible Gurtstraffer zum Schutz eines Insassen ausgelöst wird. Der Gurtstrafferantriebsmotor strafft den Gurt mit vorgebbarer hoher Straffstärke, das heißt der Motorstrom beträgt I = Iₛ, wobei abhängig von der Ausführung des Gurtstraffers der Motorstrom bzw. die Gurtstrafferantriebskraft an eine Gefahrensituation und/oder an ermittelte Insassenparameter angepasst werden können. Die Gurtkraft steigt bis auf einen Straffwert und die von der Gurtspule abgewickelte Gurtlänge sinkt auf einen Minimalwert.

Das Ende der eigentlichen Gurtstraffung, welche dem Insassenschutz dient, ist durch ein vorgebbares Zeitintervall t₂ - t₀ festgelegt und ergänzend oder alternativ an eine vorgebbare Bedingung, beispielsweise einen Schwellwert für die Fahrzeugbeschleunigung oder die Gurtkraft geknüpft. In diesem Straffintervall steigt der Motorstrom bis zum Zeitpunkt t₁ um für eine kurze Zeitdauer t₂ - t₁ auf dem vorgebbaren Straffwert Iₛ zu bleiben. Die Zeitdauer t₂ - t₁ kann auch 0 s betragen, so dass an die Anstiegsphase des Motorstroms sogleich die Phase zwischen den Zeitpunkten t₂ und t₃ anschließt, in welcher der Motorstrom auf ein Rückhalteniveau I = I_{R} abgesenkt wird. Dieses Rückhalteniveau des Motorstroms kann relativ hoch sein (gestrichelter Verlauf zwischen t₃ und t₄), wobei ein Gurtauszug durch die Haltekraft des Antriebsmotors des Gurtstraffers weitgehend verhindert wird. Vorzugsweise wird jedoch das Rückhalteniveau des Motorstroms relativ gering (durchgezogener Verlauf zwischen t₃ und t₄). Ein Teil der Rückhaltekraft wird dann durch die Reibungskräfte erzeugt, welche beispielsweise an der Gurtumlenkrolle auftreten. Der Motorstrom kann zusätzlich beispielsweise bei einer Fahrzeugbeschleunigung über 5 m/s² bis auf I = I_{R} = 0 abgesenkt werden. Ein unerwünschter Gurtauszug zwischen den Zeitpunkten t₃ und t₄ wird in diesem Fall (I_{R} « I_{S}) durch die Blockiervorrichtung fast vollständig verhindert, mit Ausnahme eines geringfügigen Abwickelns des Gurtbandes bis die Gurtspule eine Position erreicht, in welcher die Blockiervorrichtung greift und einen weiteren Gurtauszug verhindert.

Mittels Parametern wie der Fahrzeuggeschwindigkeit, der Bremspedalbetätigung, der Gaspedalbetätigung oder der Lenkradbetätigung wird auf das Ende einer Gefahrensituation und auf einen Normalbetriebszustand des Fahrzeugs geschlossen, beispielsweise wenn nach einer Vollbremsung das Bremspedal gelöst wird oder das Fahrzeug zum Stehen kommt.

Nachdem zum Zeitpunkt t₄ auf einen Normalbetriebszustand des Fahrzeugs geschlossen wird und gegebenenfalls weitere Bedingungen erfüllt sind, wird der Antrieb des Gurtstraffers im Öffnungsmodus angesteuert. Der Motorstrom des Antriebsmotors des Gurtstraffers wird für eine vorgebbare Haltezeit T_{H} = t₆ - t₅ auf eine Haltestromstärke I=I_{H} geregelt. Der Motorstrom wird im Öffnungsmodus so geregelt, dass zwischen den Zeitpunkten t₄ und t₅ die Gurtspule so weit in Aufwickelrichtung dreht bis die Position der Gurtspule ein Öffnen der Blockiervorrichtung ermöglicht, wobei das Gurtband ein kleines Stück aufgewickelt wird. Hierzu dürfen bei einer üblichen Blockiervorrichtung, welche aus Sperrklinke und einer komplementärer Verzahnung auf der Gurtspule besteht, die hinterschnittenen Zähne von Sperrklinke und Verzahnung nicht mehr überlappen. Der Mindestdrehwinkel ist bei einer solchen Blockiervorrichtung durch den Winkel der Hinterschneidung gegeben. Zum Zeitpunkt t₅ hat sich die Gurtspule um den erforderlichen Drehwinkel gedreht, welcher mittels eines Drehwinkelgebers erfasst oder mittels einer Auswertung des Motorstroms ermittelt werden kann.

In dem besonderen Fall, dass ein Insasse auch nach Beendigung der Gefahrensituation im Öffnungsmodus mit hoher Kraft vom Gurtband gehalten wird, kann der Haltestrom I_{H} höher als der ursprüngliche Straffstrom Iₛ sein.

Damit die Blockiervorrichtung öffnen kann, beziehungsweise damit sie beim Abwickeln des Gurtbandes nicht erneut schließt müssen weitere Bedingungen erfüllt sein. So muss die Fahrzeugbeschleunigung unterhalb einem vorgegebenen Beschleunigungsschwellwert liegen, so dass der beschleunigungssensitive Sensor nicht anspricht. Dies ist im Anschluss an eine Vollbremsung häufig erst nach einer kurzen Ausschwingphase des Fahrzeugs gegeben. Aus diesem Grund wird die Haltezeit T_{H} = t₆ - t₅ in Abhängigkeit der Fahrzeuggeschwindigkeit und einem Bremsassistenzsignal ermittelt und T_{H} = T₁ gesetzt, falls beim Einleiten des Öffnungsmodus aufgrund des Wegfalls des Bremsassistenzsignals zum Zeitpunkt t₄ die Fahrgeschwindigkeit gleich Null ist. Ist die Fahrgeschwindigkeit beim Einleiten des Öffnungsmodus größer Null, so wird die Haltezeit T_{H} = T₂ gesetzt, wobei T₁ > T₂ ist. Zum Zeitpunkt t₆ ist sichergestellt, dass alle Bedingungen zum Öffnen der Blockiervorrichtung erfüllt sind, und das Gurtband wird in der Abwickelphase zwischen den Zeitpunkten t₆ und t₇ zum Abwickeln freigeben. Zum Zeitpunkt t₁ befindet sich reversible Gurtstraffer wieder im Grundzustand.

Als Gurtstrafferantrieb können auch zwei oder mehr Antriebsvorrichtungen vorgesehen sein. Insbesondere kann ein zweiter Elektromotor neben einem ersten Elektromotor vorgesehen sein, wobei der erste Elektromotor oder die erste Antriebsvorrichtung speziell für die Gurtstraffung in einer Gefahrensituation ausgelegt ist und der zweite Elektromotor oder die zweite Antriebsvorrichtung speziell für den Öffnungsmodus ausgelegt ist.

## Patentansprüche

1. Verfahren zur Ansteuerung eines reversiblen Gurtstraffers zum Straffen eines sich von einer Gurtspule abwickelnden Gurtbandes eines Sicherheitsgurts in einem Kraftfahrzeug wobei
- der Gurtstraffer eine auf die Gurtspule wirkenden Antrieb aufweist und
- der Sicherheitsgurt als Gurtauszugssperre eine auf die Gurtspule in Abwickelrichtung wirkende Blockiervorrichtung aufweist, deren Blockierung nur gelöst werden kann, wenn die Gurtspule um einen bestimmten Drehwinkel in Aufwickelrichtung gedreht wird,
**dadurch gekennzeichnet, dass**
nach dem durch eine Gefahrensituation bedingten Auslösen des Gurtstraffers und bei Vorliegen eines vorgegebenen Fahrzeugbetriebszustands, welcher indikativ für eine Beendigung der Gefahrensituation ist, der Antrieb des Gurtstraffers zum Öffnen der Blockiervorrichtung in einem Öffnungsmodus in der Weise angesteuert wird, dass zunächst in einer Aufwickelphase sich die Gurtspule um den bestimmten Drehwinkel in Aufwickelrichtung dreht, und in einer anschließenden Haltephase der Antrieb des Gurtstraffers für eine vorgebbare Haltezeit T_{H} so angesteuert wird, dass die Gurtspule in Ihrer Winkelstellung gehalten wird.

2. Verfahren nach Anspruch 1,
**dadurch gekennzeichnet, dass**
die Haltezeit T_{H} so vorgegeben wird, dass in allen oder zumindest den am häufigsten vorkommenden Situationen spätestens bis zum Ende der Haltezeit T_{H} der fahrzeugsensitive Sensor der Gurtauszugssperre das Öffnen der Blockiervorrichtung ermöglicht.

3. Verfahren nach einem der Ansprüche 1 oder 2,
**dadurch gekennzeichnet, dass**
die Haltezeit T_{H} als eine Funktion mindestens eines fahrdynamischen Parameters vorgegeben wird, der oder die zur Ermittlung der Haltezeit T_{H} erforderliche(n) Parameter erfasst werden und die Haltezeit T_{H} mittels dieses oder diesen erfassten Parameter(n) ermittelt wird.

4. Verfahren nach Anspruch 3,
**dadurch gekennzeichnet, dass**
die Haltezeit T_{H} eine Funktion der Fahrzeuglängsbeschleunigung und/oder der Fahrzeugquerbeschleunigung und/oder eines Reibwerts zwischen Reifen und Straße und/oder eines Bremsdrucks und/oder der Fahrzeuggeschwindigkeit und/oder der Gierrate des Fahrzeugs und/oder des Lenkwinkels ist.

5. Verfahren nach einem der Ansprüche 3 oder 4,
**dadurch gekennzeichnet, dass**
die Haltezeit T_{H} eine Funktion eines Signals eines Fahrdynamikregelsystems und/oder eines Signals eines Bremsassistenzsystems ist.

6. Verfahren nach Anspruch 5,
**dadurch gekennzeichnet, dass**
die Haltezeit T_{H} eine Funktion der Fahrzeuggeschwindigkeit und eines Signals eines Bremsassistenzsystems ist, wobei das Bremsassistenzsignal eine Vollbremsung und eine Auslösung des reversibles Gurtstraffers zum Schutz eines Fahrzeuginsassen bewirkt, und die Haltezeit, T_{H} gleich einer ersten Zeitdauer T₁ ist, wenn das Fahrzeug nach Wegfall des Bremsassistenzsignals und/oder nach Beendigung der Vollbremsung eine Geschwindigkeit kleiner oder gleich einem Geschwindigkeitsschwellwert aufweist und die Haltezeit T_{H} gleich einer zweiten Zeitdauer T₂ ist, wenn das Fahrzeug nach Wegfall des Bremsassistenzsignals eine Geschwindigkeit größer dem Geschwindigkeitsschwellwert aufweist.

7. Verfahren nach Anspruch 6,
**dadurch gekennzeichnet, dass**
die erste Zeitdauer T₁ größer als die zweite Zeitdauer T₂ ist.

8. Verfahren nach einem der vorhergehenden Ansprüche,
**dadurch gekennzeichnet, dass**
der Geschwindigkeitsschwellwert gleich Null ist.

## Claims

1. Method for actuating a reversible belt pretensioner for pretensioning a belt webbing, unwinding from a belt reel, of a seat belt in a motor vehicle,
- the belt pretensioner having a drive which acts on the belt reel, and
- the seat belt having, as belt extraction lock, a locking device which acts on the belt reel in the unwinding direction and whose locking can be released only if the belt reel is rotated through a specific angle of rotation in the winding-on direction,
**characterized in that**, after the triggering of the belt pretensioner brought about by a hazardous situation and when a predefined vehicle operating state which is indicative of the ending of the hazardous situation applies, the drive of the belt pretensioner for opening the locking device is actuated in an opening mode in such a way that firstly, in a winding-on phase, the belt reel is rotated through the specific angle of rotation in the winding-on direction and in a subsequent holding phase the drive of the belt pretensioner is actuated for a predefinable holding time T_{H} in such a way that the belt reel is held in its angular position.

2. Method according to Claim 1, **characterized in that** the holding time T_{H} is predefined in such a way that the vehicle-sensitive sensor of the belt extraction lock permits the opening of the locking device in all, or at least the most frequently occurring situations, at the latest up to the end of the holding time T_{H}.

3. Method according to one of Claims 1 or 2, **characterized in that** the holding time T_{H} is predefined as a function of at least one vehicle-movement dynamics parameter, the parameter or parameters necessary for determining the holding time T_{H} are registered, and the holding time T_{H} is determined by means of this registered parameter or these registered parameters.

4. Method according to Claim 3, **characterized in that** the holding time T_{H} is a function of the vehicle longitudinal acceleration and/or the vehicle transverse acceleration and/or a coefficient of friction between the tyre and road and/or a brake pressure and/or the velocity of the vehicle and/or the yaw rate of the vehicle and/or the steering angle.

5. Method according to one of Claims 3 or 4, **characterized in that** the holding time T_{H} is a function of a signal of a vehicle-movement dynamics control system and/or a signal of a brake booster system.

6. Method according to Claim 5, **characterized in that** the holding time T_{H} is a function of the velocity of the vehicle and of a signal of a brake booster system, the brake booster signal bringing about full braking and triggering of the reversible belt pretensioner in order to protect a vehicle occupant, and the holding time T_{H} being equal to a first time period T₁ if, after the disappearance of the brake booster signal and/or after the termination of the full braking, the vehicle has a velocity which is less than or equal to a velocity threshold value, and the holding time T_{H} is equal to a second time period T₂ if, after the disappearance of the brake booster signal, the vehicle has a velocity which is higher than the velocity threshold value.

7. Method according to Claim 6, **characterized in that** the first time period T₁ is longer than the second time period T₂.

8. Method according to one of the preceding claims, **characterized in that** the velocity threshold value is equal to zero.

## Revendications

1. Procédé pour commander un tendeur de ceinture réversible pour tendre une bande de ceinture d'une ceinture de sécurité qui se déroule d'une bobine de ceinture dans un véhicule automobile,
- le tendeur de ceinture présentant un mécanisme d'entraînement qui agit sur la bobine de ceinture et
- la ceinture de sécurité présentant comme dispositif anti-extraction de ceinture un dispositif de blocage agissant sur la bobine de ceinture dans le sens du déroulement dont le blocage ne peut être libéré que lorsque la bobine de ceinture est tournée selon un angle de rotation donné dans le sens de l'enroulement,
**caractérisé en ce qu'**après le déclenchement du tendeur de ceinture provoqué par une situation de danger et en présence d'un état opérationnel prédéfini du véhicule, lequel indique une fin de la situation de danger, le mécanisme d'entraînement du tendeur de ceinture est commandé dans un mode d'ouverture en vue d'ouvrir le dispositif de blocage de telle sorte que dans une phase d'enroulement, la bobine de ceinture tourne initialement selon l'angle de rotation donné dans le sens de l'enroulement et, dans une phase d'arrêt qui suit, le mécanisme d'entraînement du tendeur de ceinture est commandé pendant un temps d'arrêt T_{H} pouvant être prédéfini de telle sorte que la bobine de ceinture est maintenue dans sa position angulaire.

2. Procédé selon la revendication 1, **caractérisé en ce que** le temps d'arrêt T_{H} est prédéfini de telle sorte que dans toutes les situations, ou au moins dans les situations les plus souvent rencontrées, le capteur du dispositif anti-extraction de ceinture réagissant au véhicule permet l'ouverture du dispositif de blocage au plus tard à la fin du temps d'arrêt T_{H}.

3. Procédé selon la revendication 1 ou 2, **caractérisé en ce que** le temps d'arrêt T_{H} est prédéfini en fonction d'au moins un paramètre dynamique de conduite, le ou les paramètres nécessaires à la détermination du temps d'arrêt T_{H} sont détectés et le temps d'arrêt T_{H} est déterminé au moyen de ce ou de ces paramètres détectés.

4. Procédé selon la revendication 3, **caractérisé en ce que** le temps d'arrêt T_{H} est une fonction de l'accélération longitudinale du véhicule et/ou de l'accélération transversale du véhicule et/ou d'un indice de frottement entre les pneumatiques et la route et/ou d'une pression de freinage et/ou de la vitesse du véhicule et/ou du taux de lacet du véhicule et/ou de l'angle de direction.

5. Procédé selon l'une des revendications 3 ou 4, **caractérisé en ce que** le temps d'arrêt T_{H} est une fonction d'un signal d'un système de régulation dynamique de la conduite et/ou d'un signal d'un système d'assistance au freinage.

6. Procédé selon la revendication 5, **caractérisé en ce que** le temps d'arrêt T_{H} est une fonction de la vitesse du véhicule et d'un signal d'un système d'assistance au freinage, le signal d'assistance au freinage provoquant un freinage complet et un déclenchement du tendeur de ceinture réversible pour protéger un occupant du véhicule, et le temps d'arrêt T_{H} est égal à une première durée T₁ lorsque le véhicule, après la disparition du signal d'assistance au freinage et/ou après la fin du freinage complet, présente une vitesse inférieure ou égale à une valeur de seuil de vitesse et le temps d'arrêt T_{H} est égal à une deuxième durée T₂ lorsque le véhicule, après la disparition du signal d'assistance au freinage, présente une vitesse supérieure à une valeur de seuil de vitesse.

7. Procédé selon la revendication 6, **caractérisé en ce que** la première durée T₁ est supérieure à la deuxième durée T₂.

8. Procédé selon l'une des revendications précédentes, **caractérisé en ce que** la valeur de seuil de la vitesse est égale à zéro.
